# EUROPEAN PATENT SPECIFICATION

(11) **EP 2 420 606 B1**
(45) Date of publication and mention of the grant of the patent: **27.12.2017**
(21) Application number: 11174771.3
(22) Date of filing: 21.07.2011
(51) Int. Cl.: D06F 37/30

(54) **Motor for washing machine and washing machine having the same**
Motor für Waschmaschine und Waschmaschine damit
Moteur pour machine à laver et machine à laver dotée de celui-ci

(30) Priority: 20.08.2010 KR 20100080788
(43) Date of publication of application: 22.02.2012
(73) Proprietor: Samsung Electronics Co., Ltd., Suwon-si, Gyeonggi-do, 443-742 (KR)
(72) Inventor: Lee, Woon Yong, Gyeonggi-do (KR)
(74) Representative: Grünecker Patent- und Rechtsanwälte PartG mbB

(56) References cited:
- EP-A2- 1 548 171
- JP-A- 60 174 038
- US-A1- 2010 058 817

## Description

### BACKGROUND

### 1. Field

Embodiments relate to a washing machine and a rotor for a motor which drives a drum of a washing machine (see EP-A-1 548 171).

### 2. Description of the Related Art

A washing machine is an apparatus which washes laundry using electricity, and generally includes a tub to contain wash water, a drum rotatably installed in the tub, and a motor to rotate the drum.

When the drum is rotated by the motor under the condition that laundry and detergent-containing water are supplied into the drum, dirt is removed from the laundry using friction of the laundry with the drum and the wash water.

Washing machines are divided into an indirect driving type in which power of a motor is transmitted to a drum through a power transmission device including belts and pulleys and a direct driving type in which power of a motor is transmitted directly to a shaft of a drum.

A motor of a direct driving type washing machine includes a stator mounted on a tub, and a rotor disposed around the stator and electromagnetically interacting with the stator.

EP-A-1548171 discloses a motor with a rotor comprising a rotor frame made of metal. This rotor frame comprises a ring-shape rib to which some magnets are attached. A back yoke and molded portion are also used wherein the molded portion is provided on an outside of the back yoke for fixedly securing the back yoke to the rotor frame and to prevent the back yoke from falling off the rotor frame.

A particular resin adhering portion as part of the rotor frame is used which resin adhering portion maybe a hole passing through the rotor frame.

### SUMMARY

It is an object of the present invention to provide a washing machine and a rotor for a motor for a washing machine which is improved so as to shorten a manufacturing process thereof and to reduce noise generation, and a washing machine having the same.

Additional aspects will be set forth in part in the description which follows and, in part, will be apparent from the description, or may be learned by practice of the invention.

This object is solved by the features of the independent claims 1, 8 and 15. Ring-shaped rib and back yoke ring may be made of different materials and the back yoke ring may be connected to the upper portion of the ring-shaped rib in a direction of extending the ring-shaped rib.

A connection groove connected with one end of the back yoke ring may be provided on the upper portion of the ring-shaped rib.

At least one connection protrusion formed in the circumferential direction of the base may be provided at the inside of the connection groove, and at least one connection hole connected with the at least one connection protrusion may be provided on the side surface of the back yoke ring in the circumferential direction of the back yoke ring.

Magnets may be connected to the inner surface of the back yoke ring in the circumferential direction of the back yoke ring.

The base may include air inflow holes formed through the base in the radial direction.

The base may include cooling blades protruded to the inside of the rotor.

The side wall may be connected to the upper portion of the ring-shaped rib in a direction of extending the ring-shaped rib.

A connection groove connected with one end of the side wall may be provided on the upper portion of the ring-shaped rib, and at least one connection protrusion formed in the circumferential direction of the bottom may be provided at the inside of the connection groove

The side wall may include a bending part bent in a direction of extending the radius of the side wall and at least one through hole formed so as to allow molten resin to pass through the side surface of the side wall during the injection molding process of the bottom.

The bottom may include air inflow holes formed through the bottom in the radial direction so that external air is introduced into the rotor through the air inflow holes and cooling blades protruded to the inside of the rotor so as to generate an air flow within the rotor.

A central part of the bottom may be protruded to the inside of the rotor.

The sidewall may comprise a first side wall protruded from the edge of the base, and a second side wall connected with the first side wall, wherein the first side wall and the second side wall are made of different materials and the second side wall is connected to the upper portion of the first side wall in parallel with the first side wall.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a view illustrating a washing machine in accordance with one embodiment;
FIG. 2 is a perspective view illustrating a configuration of a rotor in accordance with the embodiment;
FIG. 3 is a cross-sectional view taken along the line I-I of FIG. 2;
FIG. 4 is an enlarged view of the portion 'A' of FIG. 3;
FIG. 5 is a perspective view of a side wall separated from FIG. 2;
FIG. 6 is a view illustrating a process of manufacturing the side wall in accordance with the embodiment, shown in FIG. 5;
FIG. 7 is a perspective view of a side wall in accordance with another embodiment; and
FIG. 8 is a view illustrating a process of manufacturing the side wall in accordance with the embodiment of the present invention, shown in FIG. 7.

### DETAILED DESCRIPTION

Reference will now be made in detail to the embodiments, examples of which are illustrated in the accompanying drawings, wherein like reference numerals refer to like elements throughout.

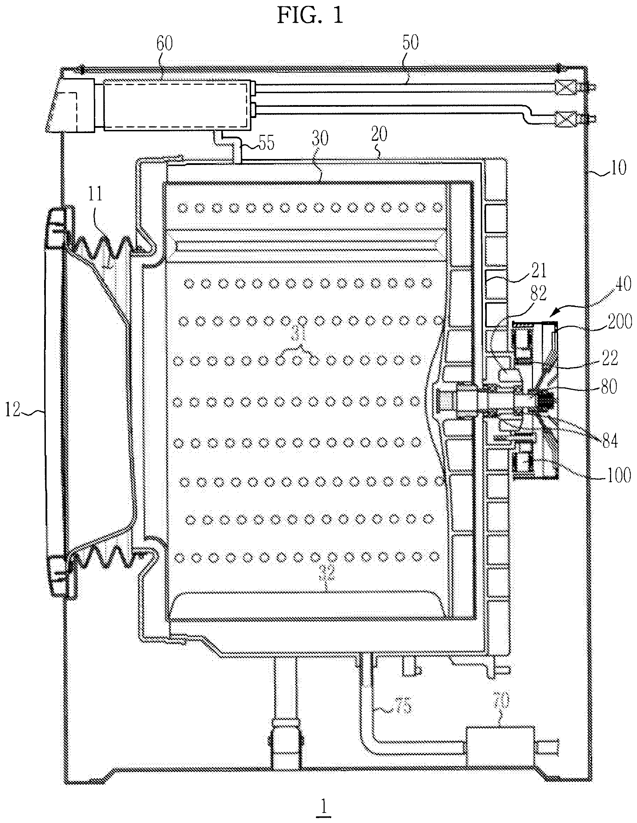

FIG. 1 is a view illustrating a washing machine in accordance with one embodiment.

As shown in FIG. 1, a washing machine 1 in accordance with this embodiment includes a cabinet 10 forming the external appearance of the washing machine 1, a tub 20 disposed in the cabinet 10, a drum 30 rotatably disposed in the tub 20, and a motor 40 to drive the drum 30.

An inlet 11 is formed through the front surface of the cabinet 10 so that the laundry is put into the drum 30 through the inlet 11. The inlet 11 is opened and closed by a door 12 installed on the front surface of the cabinet 10.

Water supply pipes 50 to supply wash water to the tub 20 are installed above the tub 20. Ends of the water supply pipes 50 are connected to an external water supply source (not shown), and the other ends of the water supply pipes 50 are connected to a detergent supply device 60. The detergent supply device 60 is connected to the tub 20 through a connection pipe 55. Water supplied through the water supply pipes 50 passes through the detergent supply device 60, and then a water-detergent mixture is supplied to the inside of the tub 20.

A drain pump 70 and a drain pipe 75 to discharge water in the tub 20 to the outside of the cabinet 10 are installed under the tub 20.

A plurality of through holes 31 to circulate wash water is formed through the circumferential surface of the tub 20, and a plurality of lifters 32 to tumble laundry when the drum 30 is rotated is installed on the inner circumferential surface of the drum 30.

A drive shaft 80 is disposed between the drum 30 and the motor 40. The drive shaft 80 transmits rotary force of the motor 40 to the drum 30. One end of the drive shaft 80 is connected to the drum 30 and the other end of the drive shaft 80 is extended to the outside of a rear wall 21 of the tub 20.

A bearing housing 82 to rotatably support the drive shaft 80 is installed on the rear wall 21 of the tub 20. The bearing housing 82 is made of an aluminum alloy, and is inserted into the rear wall 21 of the tub 20 while the tub 20 is formed by injection molding. Bearings 84 allowing the drive shaft 80 to be smoothly rotated are installed between the bearing housing 82 and the drive shaft 80.

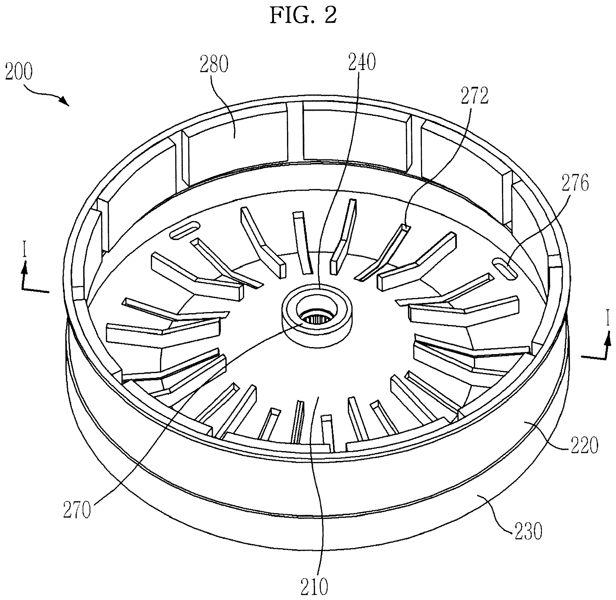

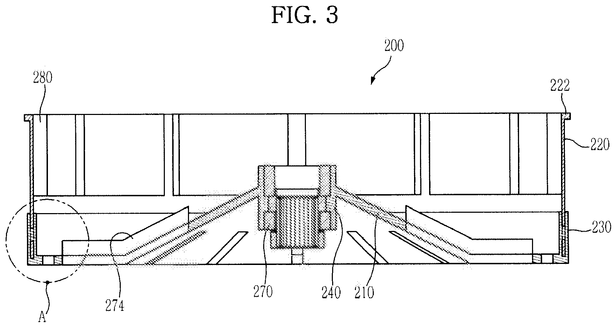

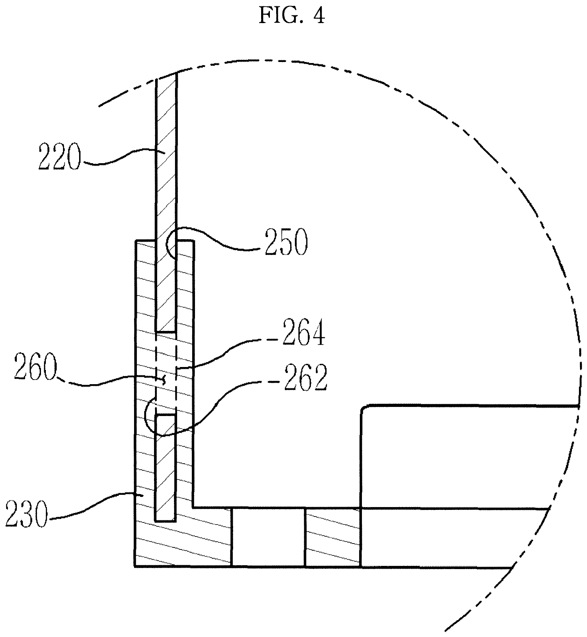

FIG. 2 is a perspective view illustrating a configuration of a rotor in accordance with the embodiment, FIG. 3 is a cross-sectional view taken along the line I-I of FIG. 2, and FIG. 4 is an enlarged view of the portion 'A' of FIG. 3.

As shown in FIGS. 1 to 4, the motor 40 is disposed at the outside of the tub 20 and supplies power to the drum 30 to rotate the drum 30 in both directions. The motor 40 includes a stator 100 mounted on the rear wall 21 of the tub 20 and a rotor 200 disposed around the stator 100 and electromagnetically interacting with the stator 100.

The rotor 200 includes a bottom 210 and a side wall 220 connected to the bottom 210.

The bottom 210 is provided with a ring-shaped rib 230 formed at the edge of the bottom 210 to connect the side wall 220 to the bottom 210 and a central part 240 to which the drive shaft 80 is connected.

The ring-shaped rib 230 is protruded from the edge of the bottom 210 to a designated height in the circumferential direction of the bottom 210, and a connection groove 250 to which one end of the side wall 220 is connected is formed on the upper portion of the ring-shaped rib 230.

The connection groove 250 is formed on the upper portion of the ring-shaped rib 230 to a designated depth in the circumferential direction of the ring-shaped rib 230, and at least one connection protrusion 260, which is protruded from one surface 262 within the connection groove 250 toward the center of the bottom 210 and is connected to the other surface 264 within the connection groove 250, is provided within the connection groove 250. Further, the connection protrusion 260 may be arranged in the circumferential direction of the ring-shaped rib 230.

The central part 240 is protruded to the inside of the rotor 200, and a serration member 270 is connected to the inner surface of the central part 240. The serration member 270 is made of metal, such as iron or an aluminum alloy, and is connected to the end of the drive shaft 80 extended to the outside of the tub 20. The serration member 270 may be inserted into the central part 240 while the bottom 210 is formed by injection molding.

The height of the central part 240 may be greater than the height of the ring-shaped rib 230 formed at the edge of the bottom 210.

Further, a plurality of air inflow holes 272 and a plurality of cooling blades 274 are provided on the bottom 210.

The plurality of air inflow holes 272 serve to allow external air to flow into the rotor 200 when the rotor 200 is rotated, is formed through the bottom 210 in the radial direction of the bottom 210, and is arranged in the circumferential direction of the bottom 210.

The plurality of cooling blades 274 serve to generate an air flow within the bottom 210 to cool internal parts of the motor 40 when the rotor 200 is rotated, and are protruded to the inside of the rotor 200.

The plurality of cooling blades 274 is protruded to a designated height from the bottom 210 and is extended in the radial direction of the bottom 210, thus also serving to reinforce the strength of the bottom 210. Therefore, although the bottom 210 is thin, the plurality of cooling blades 274 prevents deformation of the bottom 210.

Holes 276 are arranged around the ring-shaped 230 in the circumferential direction. A worker assembling the motor 40 with the tub 20 easily observes whether or not a proper interval between the stator 100 and magnets 280 is uniformly maintained through the holes 276 formed around the ring-shaped rib 230.

Since all of the ring-shaped rib 230, the central part 240, the plurality of air inflow holes 272, the plurality of cooing blades 274 and the holes 276 are formed on the bottom 210, as described above, the bottom 210 functions as a base of the rotor 200.

Further, the ring-shaped rib 230, the central part 240, the plurality of air inflow holes 272, the plurality of cooing blades 274 and the holes 276, which are formed on the bottom 210, are formed integrally with the bottom 210 by injection molding.

Here, as a material used during injection molding, any plastic, such as fiberglass reinforced polypropylene (FRPP), having sufficient strength to prevent shape deformation thereof during rotation of the rotor 200 connected to the drive shaft 80 may be used.

As described above, the bottom 210 is formed by injection molding using plastic, and thus noise is reduced when the rotor 220 is rotated. If the bottom 210 is made of plastic, the bottom 210 generates lower noise as compared with a bottom made of metal, and functions as a kind of damper to reduce noise generated from surroundings.

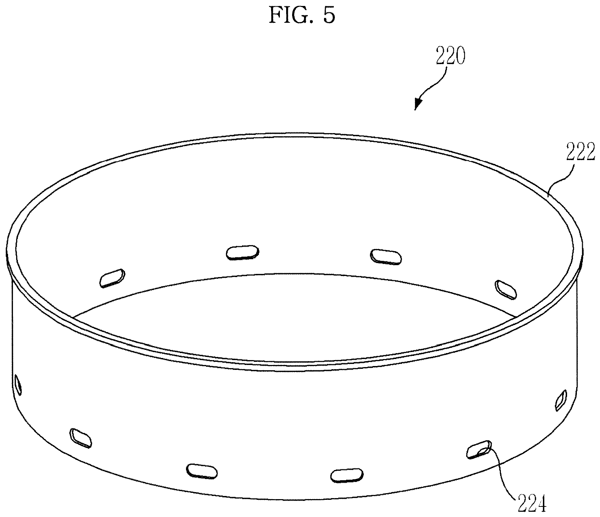

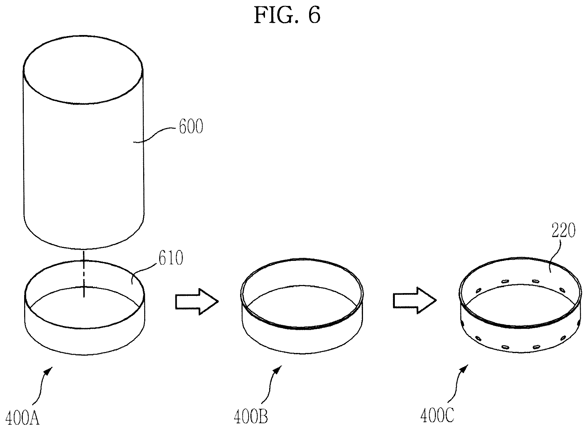

FIG. 5 is a perspective view of the side wall separated from FIG. 2 and FIG. 6 is a view illustrating a process of manufacturing the side wall in accordance with the embodiment of the present invention, shown in FIG. 5.

As shown in FIGS. 1 to 6, the side wall 220 is connected to the upper portion of the ring-shaped rib 230 of the bottom 210 in a direction of protruding and extending the ring-shaped rib 230. That is, the side wall 230 is connected to the ring-shaped rib 230 in parallel with the ring-shaped rib 230 such that the side wall 230 is vertical with respect to the bottom 210.

Further, the side wall 220 and the ring-shaped rib 230 are connected to each other, thereby completing the side surface of the bottom 210. Therefore, the ring-shaped rib 230 may be regarded as a first side wall and the side wall 220 may be regarded as a second side wall.

The side wall 220 is made of metal having magnetic properties. The side wall 220 generally has a thickness of more than 1.6 mm, but may have a thickness of less than 1.6 mm in order to achieve productivity improvement and material cost reduction.

A bending part 222 and through holes 224 are provided on the side wall 220.

The bending part 222 is formed by bending the upper end of the side wall 220 in a direction of extending the radius of the side wall 220.

The through holes 224 are formed through the lower end of the side wall 220 and are arranged in the circumferential direction of the side wall 220.

The side wall 220 is connected to a mold (not shown) for injection molding and is thus inserted into the ring-shaped rib 230 of the bottom 210 while the bottom 210 is formed by injection molding.

In more detail, the lower end of the side wall 220 is inserted into the ring-shaped rib 230 of the bottom 210. By inserting the lower end of the side wall 220 into the ring-shaped rib 230 of the bottom 210, the connection groove 250 is formed on the ring-shaped rib 230. That is, while molten resin injected into the mold fills a cavity (not shown) formed in the mold along the side wall 220, the molten resin located around the lower end of the side wall 220 forms the ring-shaped rib 230 and the connection groove 250.

Here, during the injection molding process of the bottom 210, the through holes 224 allow the molten resin to pass through the side wall 220 and the molten resin located in the through holes 224 is solidified to form the connection protrusions 260.

Since the bottom 210 and the side wall 220 are connected to each other by the connection protrusions 260 and the through holes 224, as described above, idle rotation of the side wall 220 in the connection groove 250 provided on the ring-shaped rib 230 and separation of the side wall 220 from the connection groove 250 when the rotor 200 is rotated is prevented.

Further, the magnets 280 are arranged on the inner surface of the side wall 220 in the circumferential direction. The magnets 280 are positioned opposite the stator 100 at a designated interval so as to electromagnetically interact with the stator 100.

The side wall 220 is made of metal having magnetic properties, as described above, and thus allows a magnetic field of the magnets 280 arranged on the inner surface of the side wall 220 to be uniformly distributed along the side wall 220 and prevents the magnetic field of the magnets 280 from leaking, thereby functioning as a back yoke ring connected to a rotor of a motor of a general washing machine as well as forming the side surface of the rotor 200.

The above side wall 220 is manufactured by a process, as follows.

As shown in FIG. 6, a circular basic material 610 is formed by cutting a cylindrical pipe 600 having a diameter equal or similar to the diameter of the bottom 210 of the rotor 200 to a designated height (Operation 400A). Here, in order to manufacture the pipe 600 to form the circular basic material 610, a general extrusion method or a method using a standard product having a diameter equal or similar to the diameter of the bottom 210 of the rotor 200 may be used. Further, the pipe 600 may be made of metal having magnetic properties.

After the circular basic material 610 is formed by cutting the cylindrical pipe 600, the bending part 222 is formed on the upper end of the circular basic material 610 (Operation 400B).

As described above, the bending part 222 means a part obtained by bending the circular basic material 610 in a direction of extending the radius of the circular basic material 610. The bending part 222 is formed by disposing the circular basic material 610 on a press device in which a mold having a shape corresponding to the shape of the being part 222 is mounted and by pressing the circular basic material 610 using a pressure unit of the press device.

After the bending part 222 is formed on the upper end of the circular basic material 610, the through holes 224 are formed on the side surface of the lower end of the circular basic material 610 (Operation 400C). Thereby, the side wall 220 is completed.

The through holes 224 are formed by disposing the circular basic material 610 on a press device provided with a jig having a shape corresponding to the shape of the through holes 224 and by pressing the circular basic material 610 using a pressure unit of the press device. Since the through holes 224 need to be arranged at designated intervals along the circumferential surface of the circular basic material 610, the jig having the shape corresponding to the shape of the through holes 224 is mounted on the press device such that the jig may be rotated around the circular basic material 610.

In the above process of manufacturing the side wall 220, the through holes 224 may be formed in advance. That is, the side wall 220 may be manufactured by forming through holes 224 on the side surface of the pipe 600 before cutting the pipe 600, cutting the pipe 600, and then forming the bending part 222.

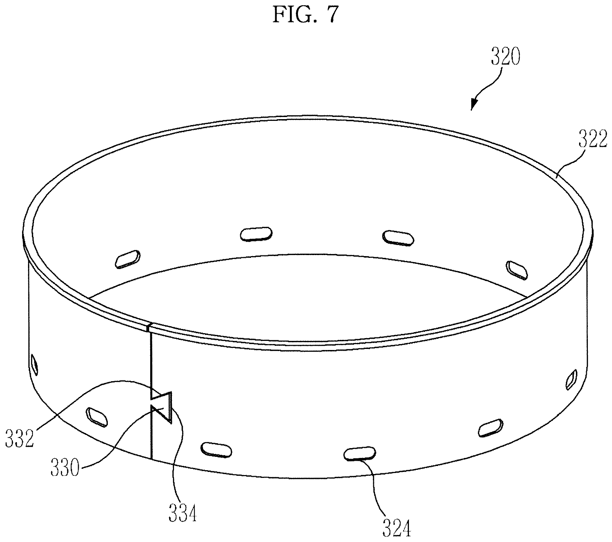

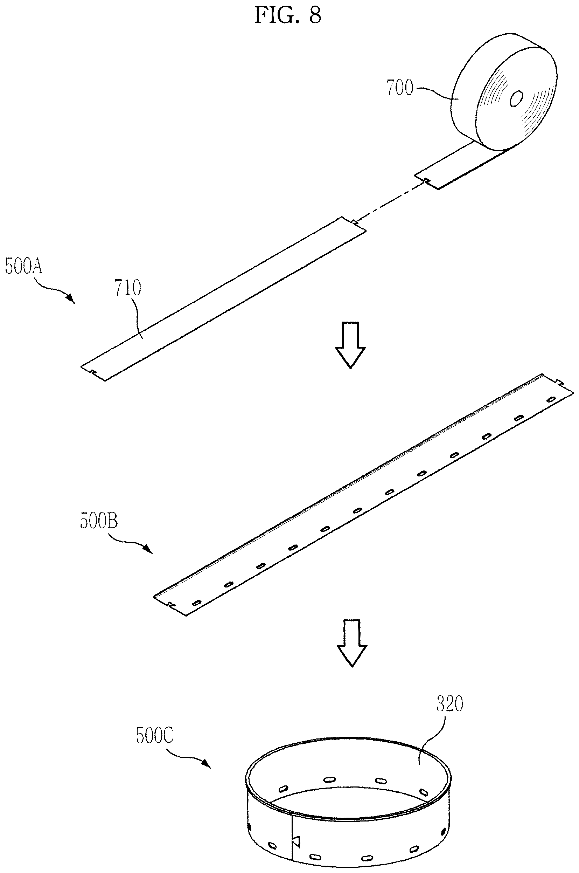

FIG. 7 is a perspective view of a side wall in accordance with another embodiment and FIG. 8 is a view illustrating a process of manufacturing the side wall in accordance with the embodiment of the present invention, shown in FIG. 7.

As shown in FIGS. 7 and 8, a side wall 320 of a rotor 200 may be manufactured in a method differing from the former method of manufacturing the side wall 220 by cutting the cylindrical pipe 600.

First, a unit basic material 710 is formed by cutting a roll basic material 700 having a width corresponding to the height of the rotor 200 to a designated length (Operation 500A). Here, the roll basic material 700 may be made of metal having magnetic properties.

After the unit basic material 710 is made, a bending part 322 and through holes 324 are formed on the unit basic material 710 (Operation 500B).

Differing from the former method of manufacturing the side wall 220 by cutting the cylindrical pipe 600, the unit basic material 710 has a flat shape other than a cylindrical shape, and thus if the through holes 324 are formed, it is not necessary to mount a jig on a press device such that the jig is rotatable or to use a rotatable jig, but the through holes 324 are formed by transferring the unit basic material 710 at a regular velocity to a press device on which a jig having a shape corresponding to the shape of the through holes 324 is mounted.

Further, without transfer of the unit basic material 710, the through holes 324 may be formed through one pressing process using jigs provided in the number of the through holes 324 formed on the unit basic material 710, which are integrally formed.

After the bending part 322 and the through holes 324 are formed on the unit basic material 710, the unit basic material 710 is rolled into a cylindrical shape and then both ends of the unit basic material 710 are fixed to each other (Operation 500C). Thereby, the side wall 320 is completed.

In order to fix both ends of the unit basic material 710 to each other, a fixing protrusion 330 is provided on one end of the unit basic material 710 and a fixing depression 334 is provided on the other end of the unit basic material 710. The fixing protrusion 330 has inclined planes 332 such that the cross-sectional area of the fixing protrusion 330 is gradually increased in the protruding direction of the fixing protrusion 330 and the fixing depression 334 has a shape corresponding to the fixing protrusion 330. Therefore, both ends of the unit basic material 710 are fixed to each other by press-fitting the fixing protrusion 330 into the fixing depression 334.

Here, the fixing protrusion 330 and the fixing depression 334 are formed during cutting of the roll basic material 700 into the unit basic material 710. The fixing protrusion 330 and the fixing depression 334 may be formed using a press device on which a pressure unit having a shape corresponding to the fixing protrusion 330 or the fixing depression 334 is mounted.

Both ends of the unit basic material 710 may be connected by other methods, such as welding.

If the side wall 220 or 320 is manufactured by cutting the cylindrical pipe 600 or by rolling the unit basic material 710, the side wall 220 or 320 may be manufactured separately and then inserted into the mold, as described above. Therefore, when the rotor 200 is manufactured, a large-sized mold to form the side wall 220 and 320 integrally with the rotor 200 is not required and thus a complex process to manufacture the large-sized mold is not required.

As is apparent from the above description, in a motor for a washing machine and a washing machine having the same in accordance with each of embodiments of the present invention, a manufacturing process of a rotor of the motor is shortened and thus productivity is improved.

Further, noise generated when the rotor of the motor is rotated is reduced and user convenience is improved.

Although a few embodiments of the present invention have been shown and described, it would be appreciated by those skilled in the art that changes may be made in these embodiments without departing from the principles of the invention, the scope of which is defined in the claims.

## Claims

1. A washing machine (1) which includes a motor (40) having a rotor (200) to rotate a drum (30) of the washing machine, the rotor comprising:
a bottom (210) as a base of the rotor (200);
a ring-shaped rib (230) formed at the edge of the bottom (210) and a back yoke ring connected to the ring-shaped rib, **characterised in that**;
a side wall (220,320) made of metal having magnetic properties and functioning as said back yoke ring is connected to the ring-shaped rib (230), wherein magnets (280) are connected to the inner surface of the side wall (230,320) in the circumferential direction of same, wherein the side wall is adapted to be inserted into and connected to the ring-shaped rib while same is formed together with the bottom (210) by injection molding using plastic.

2. The washing machine according to claim 1, wherein the ring-shaped rib (230) and the back yoke ring (220) are made of different materials and the back yoke ring (220) is connected to the upper portion of the ring-shaped rib (230) in a direction of extending the ring-shaped rib.

3. The washing machine according to claim 2, wherein a connection groove (250) connected with one end of the back yoke ring (220) is provided on the upper portion of the ring-shaped rib (230).

4. The washing machine according to claim 3, wherein at least one connection protrusion (260) formed in the circumferential direction of the bottom (210) is provided at the inside of the connection groove (250), and at least one through hole (324) connected with the at least one connection protrusion (260) is provided on the side surface of the back yoke ring (220) in the circumferential direction of the back yoke ring.

5. The washing machine according to claim 1, wherein magnets (280) are connected to the inner surface of the back yoke ring (220) in the circumferential direction of the back yoke ring.

6. The washing machine according to claim 1, wherein the bottom (210) includes air inflow holes (272) formed through the bottom in the radial direction.

7. The washing machine according to claim 1, wherein the bottom includes cooling blades (274) protruding to the inside of the rotor (200).

8. A rotor (200) for a motor for a washing machine comprising:
a bottom (210) and a ring-shaped rib (230) formed at the edge of the bottom (210), **characterised in that**
said bottom (210) is formed by injection molding using plastic,
said rotor further comprises a side wall (220, 320) made of metal having magnetic properties and connected to the ring-shaped rib, wherein magnets (280) are connected to the inner surface of the side wall (220, 320) functioning as a back yoke ring in the circumferential direction of same and wherein the side wall (220, 320) is adapted to be inserted into and connected to the ring-shaped rib (230) while same is formed together with the bottom by injection molding using plastic.

9. The rotor according to claim 8, wherein the side wall (220) is connected to the upper portion of the ring-shaped rib (230) in a direction of extending the ring-shaped rib.

10. The rotor according to claim 9, wherein a connection groove (250) connected with one end of the side wall (220) is provided on the upper portion of the ring-shaped rib (230), and at least one connection protrusion (260) formed in the circumferential direction of the bottom is provided at the inside of the connection groove (250).

11. The rotor according to claim 10, wherein the side wall (220, 320) includes:
a bending part (222, 322) bent in a direction of extending the radius of the side wall; and
at least one through hole (224, 324) formed so as to allow molten resin to pass through the side surface of the side wall during the injection molding process of the bottom (210).

12. The rotor according to claim 8, wherein the bottom includes:
air inflow holes (272) formed through the bottom (210) in the radial direction so that external air is introduced into the rotor through the air inflow holes; and
cooling blades (274) protruded to the inside of the rotor so as to generate an air flow within the rotor.

13. The rotor according to claim 8, wherein a central part of the bottom (210) is protruded to the inside of the rotor (200).

14. The rotor according to claim 8, wherein said side wall (220, 320) protrudes from the edge of the bottom (210); and
said rib (230) is connected with the side wall (220, 320),
wherein the side wall and the rib are made of different materials and the ribis connected to the upper portion of the side wall in parallel with the side wall.

15. A manufacturing method of a rotor (200) for a washing machine (1) according to one of claims 8 to 14, which rotor has said bottom (210) and said side wall (220) connected with the bottom, **characterised by** the steps of:
i) manufacturing the side wall (220) by cutting a cylindrical pipe (600);
ii) fixing the side wall (220) to a mold, and
iii) injecting molten synthetic resin into the mold,
wherein the side wall (220) functioning as a back yoke ring is inserted into and connected to the bottom (210, 230) while the bottom is formed by injection molding.

## Patentansprüche

1. Waschmaschine (1) mit einem Motor (40), welcher einen Rotor (200) zum Drehen einer Trommel (30) der Waschmaschine aufweist, wobei der Rotor umfasst:
einen Boden (210) als eine Basis des Rotors (200);
eine ringförmige Rippe (230), die an einem Rand des Bodens (210) gebildet ist sowie ein Rückjochring, der mit der ringförmigen Rippe verbunden ist, **dadurch gekennzeichnet, dass**
eine Seitenwand (220, 320) aus einem Metall mit magnetischen Eigenschaften gebildet ist und als der genannte Rückjochring arbeitet, wobei die Seitenwand mit der ringförmigen Rippe (230) verbunden ist, wobei weiterhin Magnete (280) in einer Umfangsrichtung der Seitenwand (230, 320) mit deren Innenseite verbunden sind und die Seitenwand zum Einsetzen in und Verbinden mit der ringförmigen Rippe ausgebildet ist, wobei diese zusammen mit dem Boden (210) durch Spritzgießen unter Verwendung eines Kunststoffes gebildet ist.

2. Waschmaschine nach Anspruch 1, wobei die ringförmige Rippe (230) und der Rückjochring (220) aus unterschiedlichen Materialien hergestellt sind und der Rückjochring (220) mit einem oberen Bereich der ringförmigen Rippe (230) in einer Richtung zum Verlängern der ringförmigen Rippe verbunden ist.

3. Waschmaschine nach Anspruch 2, wobei eine Verbindungsnut (250), die mit einem Ende des Rückjochrings (220) verbunden ist, an einem oberen Bereich der ringförmigen Rippe (230) vorgesehen ist.

4. Waschmaschine nach Anspruch 3, wobei wenigstens ein Verbindungsvorsprung (260) in Umfangsrichtung des Bodens (210) im Inneren der Verbindungsnut (250) ausgebildet ist und wenigstens eine Durchgangsöffnung (324), die mit dem wenigstens einen Verbindungsvorsprung (260) verbunden ist, an einer Seitenfläche des Rückjochrings (220) in dessen Umfangsrichtung vorgesehen ist.

5. Waschmaschine nach Anspruch 1, wobei Magnete (280) mit der Innenseite des Rückjochrings (220) in dessen Umfangsrichtung verbunden sind.

6. Waschmaschine nach Anspruch 1, wobei der Boden (210) Lufteinströmöffnungen (272) aufweist, die durch den Boden in radialer Richtung gebildet sind.

7. Waschmaschine nach Anspruch 1, wobei der Boden Kühlblätter (274) aufweist, die zur Innenseite des Rotors (200) vorstehen.

8. Rotor (200) für einen Motor einer Waschmaschine, welcher aufweist:
einen Boden (210) und eine ringförmige Rippe (230), die an einem Rand des Bodens (210) gebildet ist, **dadurch gekennzeichnet, dass**
der Boden (210) durch Spritzgießen unter Verwendung von Kunststoff gebildet ist,
der Rotor weiterhin eine Seitenwand (220, 320) aus einem Metall mit magentischen Eigenschaften aufweist, die mit der ringförmigen Rippe verbunden ist, wobei Magnete (280) mit der Innenseite der Seitenwand (220, 320), die als Rückjochring arbeitet, in deren Umfangsrichtung verbunden sind, und wobei die Seitenwand (220, 320) ausgebildet ist zum Einsetzen in und zum Verbinden mit der ringförmigen Rippe (230), während diese zusammen mit dem Boden durch Spritzgießen unter Verwendung des Kunststoffs herstellbar ist.

9. Rotor nach Anspruch 8, wobei die Seitenwand (220) mit dem oberen Bereich der ringförmigen Rippe (230) in einer Richtung verbunden ist, um die ringförmige Rippe zu verlängern.

10. Rotor nach Anspruch 9, wobei eine Verbindungsnut (250), die mit einem Ende der Seitenwand (220) verbunden ist, in dem oberen Bereich der ringförmigen Rippe (230) vorgesehen ist, und wenigstens ein Verbindungsvorsprung (260) in Umfangsrichtung des Bodens ausgebildet und auf der Innenseite der Verbindungsnut (250) vorgesehen ist.

11. Rotor nach Anspruch 10, wobei die Seitenwand (220, 320) aufweist:
ein Krümmungsteil (222, 322), welches in einer Richtung zur Verlängerung des Seitenwandradiuses gekrümmt ist, und
wenigstens eine Durchgangsöffnung (224, 324), die so gebildet ist, das geschmolzener Kunststoff durch die Seitenfläche der Seitenwand während des Spritzgießverfahrens des Bodens (210) hindurchtreten kann.

12. Rotor nach Anspruch 8, wobei der Boden aufweist:
Lufteinströmöffnungen (272), die durch den Boden (210) in radialer Richtung so ausgebildet sind, dass externe Luft in den Rotor durch die Lufteinlassöffnungen eintritt, und
Kühlblätter (274), die von der Innenseite des Rotors so vorstehen, dass ein Luftstrom innerhalb des Rotors gebildet ist.

13. Rotor nach Anspruch 8, wobei ein Zentralteil des Bodens (210) in das Innere des Rotors (200) vorsteht.

14. Rotor nach Anspruch 8, wobei die Seitenwand (220, 320) von dem Rand des Bodens (210) vorsteht, und
die Rippe (230) mit der Seitenwand (220, 320) verbunden ist,
wobei die Seitenwand und die Rippe aus unterschiedlichen Materialien gebildet sind und die Rippe mit dem oberen Bereich der Seitenwand parallel zu dieser verbunden ist.

15. Herstellungsverfahren eines Rotors (200) für eine Waschmaschine (1) gemäß einem der Ansprüche 8 bis 14, welcher Rotor den Boden (210) und die Seitenwand (220) aufweist, welche mit dem Boden verbunden ist, **gekennzeichnet durch** die folgenden Schritte:
i) Herstellen der Seitenwand (220) durch Schneiden einer zylindrischen Röhre (600),
ii) Fixieren der Seitenwand (220) an einer Gussform, und
iii) Spritzgießen von synthetischem Kunststoff in die Gießform,
wobei die als ein Rückjochring arbeitende Seitenwand (220) eingesetzt ist in und verbunden ist mit dem Boden (210, 230) während der Boden durch Spritzgießen gebildet wird.

## Revendications

1. Machine à laver (1) qui comprend un moteur (40) ayant un rotor (200) pour faire tourner un tambour (30) de la machine à laver, le rotor comprenant:
un fond (210) en tant que base du rotor (200);
une nervure annulaire (230) formée au niveau du bord du fond (210) et un anneau de culasse arrière connecté à la nervure annulaire, **caractérisée en ce que**;
une paroi latérale (220 320) en métal ayant des propriétés magnétiques et fonctionnant comme ledit anneau de culasse arrière est connecté à la nervure annulaire (230), dans lequel des aimants (280) sont connectés à la surface intérieure de la paroi latérale (230, 320) dans la direction circonférentielle de celle-ci, dans lequel la paroi latérale est prévue pour insertion dans la nervure annulaire et connexion dans celle-ci, alors que ladite nervure est formée d'un seul tenant avec le fond (210) par moulage par injection à l'aide de matière plastique.

2. Machine à laver selon la revendication 1, dans laquelle la nervure annulaire (230) et l'anneau de culasse arrière (220) sont faits de différents matériaux et l'anneau de culasse arrière (220) est connecté à la partie supérieure de la nervure annulaire (230) dans une direction de prolongement de la nervure annulaire.

3. Machine à laver selon la revendication 2, dans laquelle une rainure de connexion (250) connectée à une extrémité de l'anneau de culasse arrière (220) est prévue sur la partie supérieure de la nervure annulaire (230).

4. Machine à laver selon la revendication 3, dans laquelle au moins une protubérance de connexion (260) formée dans la direction circonférentielle du fond (210) est prévue à l'intérieur de la rainure de connexion (250), et au moins un trou traversant (324) connecté à ladite au moins une protubérance de connexion (260) est prévue sur la surface latérale de l'anneau de culasse arrière (220) dans la direction circonférentielle de l'anneau de culasse arrière.

5. Machine à laver selon la revendication 1, dans laquelle des aimants (280) sont connectés à la surface intérieure de l'anneau de culasse arrière (220) dans la direction circonférentielle de l'anneau de culasse arrière.

6. Machine à laver selon la revendication 1, dans laquelle le fond (210) comprend des trous d'entrée d'air (272) formés à travers le fond dans la direction radiale.

7. Machine à laver selon la revendication 1, dans laquelle le fond comprend des pales de refroidissement (274) faisant saillie vers l'intérieur du rotor (200).

8. Rotor (200) pour un moteur pour une machine à laver comprenant:
un fond (210) et une nervure annulaire (230) formée au niveau du bord du fond (210), **caractérisé en ce que**
ledit fond (210) est formé par moulage par injection utilisant une matière plastique,
ledit rotor comprend en outre une paroi latérale (220, 320) en métal ayant des propriétés magnétiques et connectée à la nervure annulaire, dans lequel des aimants (280) sont connectés à la surface intérieure de la paroi latérale (230320) faisant office d'anneau de culasse arrière dans la direction circonférentielle de celui-ci et dans lequel la paroi latérale (220, 320) est prévue pour insertion dans la nervure annulaire (230) et connexion dans celle-ci, alors que ladite nervure est formée d'un seul tenant avec le fond par moulage par injection à l'aide de matière plastique.

9. Rotor selon la revendication 8, dans lequel la paroi latérale (220) est connectée à la partie supérieure de la nervure annulaire (230) dans une direction d'extension de la nervure annulaire.

10. Rotor selon la revendication 9, dans laquelle une rainure de connexion (250) connectée à une extrémité de la paroi latérale (220) est prévue sur la partie supérieure de la nervure annulaire (230), et au moins une protubérance de connexion (260) formée dans la direction circonférentielle du fond est prévue à l'intérieur de la rainure de connexion (250).

11. Rotor selon la revendication 10, dans lequel la paroi latérale (220, 320) comporte:
une partie de pliage (222, 322) pliée dans une direction d'extension du rayon de la paroi latérale; et
au moins un trou traversant (224, 324) formé de manière à permettre à la résine fondue de passer à travers la surface latérale de la paroi latérale pendant le processus de moulage par injection du fond (210).

12. Rotor selon la revendication 8, dans lequel le fond contient:
des trous d'entrée d'air (272) formés à travers le fond (210) dans la direction radiale de sorte que de l'air extérieur est introduit dans le rotor à travers les trous d'entrée d'air; et
des pales de refroidissement (274) dépassant vers l'intérieur du rotor de manière à générer un flux d'air à l'intérieur du rotor.

13. Rotor selon la revendication 8, dans lequel une partie centrale du fond (210) fait saillie à l'intérieur du rotor (200).

14. Rotor selon la revendication 8, dans lequel ladite paroi latérale (220, 320) fait saillie depuis le bord du fond (210); et
ladite nervure annulaire (230) est connectée à la paroi latérale (220, 320),
dans lequel la paroi latérale et la nervure sont réalisées en différents matériaux et la nervure est connectée à la partie supérieure de la paroi latérale parallèlement à la paroi latérale.

15. Procédé de fabrication d'un rotor (200) pour une machine à laver (1) selon l'une des revendications 8 à 14, dans lequel ledit fond (210) du rotor et ladite paroi latérale (220) du rotor étant connectée au fond, **caractérisé par** les étapes:
i) de fabrication de la paroi latérale (220) en coupant un tube cylindrique 600);
ii) de fixation de la paroi latérale (220) à un moule, et
iii) d'injection d'une résine synthétique fondue dans le moule,
dans lequel la paroi latérale (220) faisant office d'anneau de culasse arrière est insérée dans le fond (210, 230) et connectée à celui-ci, tandis que le fond est formé par moulage par injection.
